# EUROPÄISCHE PATENTSCHRIFT

(11) **EP 1 292 492 B1**
(45) Veröffentlichungstag und Bekanntmachung des Hinweises auf die Patenterteilung: **08.03.2006**
(21) Anmeldenummer: 01955202.5
(22) Anmeldetag: 06.06.2001
(51) Int. Cl.: B63B 39/00

(54) **AUTOMATISCHE WARNVORRICHTUNG VOR EINER KRITISCHEN SCHIFFSNEIGUNG**
AUTOMATIC WARNING DEVICE FOR INDICATING A CRITICAL BOAT TILT
DISPOSITIF D'ALARME AUTOMATIQUE EN CAS D'INCLINAISON CRITIQUE SUR UN BATEAU

(30) Priorität: 17.06.2000 DE 10029001
(43) Veröffentlichungstag der Anmeldung: 19.03.2003
(73) Patentinhaber: Seidel, Rainer, 59067 Hamm (DE)
(72) Erfinder: Seidel, Rainer, 59067 Hamm (DE)
(74) Vertreter: Meissner, Peter E.
(86) Internationale Anmeldenummer: PCT/DE2001/002115
(87) Internationale Veröffentlichungsnummer: WO 2001/098137

(56) Entgegenhaltungen:
- EP-A- 0 386 768
- DE-A- 2 947 347
- FR-A- 829 153
- LU-A- 90 151
- US-A- 3 865 306
- US-A- 4 718 173
- US-A- 4 872 118
- US-A- 4 960 147
- US-A- 5 107 407

## Beschreibung

Die vorliegende Erfindung betrifft eine automatische Warnvorrichtung vor kritischen Schiffsbewegung z. B. bei Wellenbildung oder Krängung gemäß Oberbegriff von Anspruch 1.

Eine solche automatische Warnvorrichtung ist aus LU 90 151 A bekannt. In einer solchen Vorrichtung des Standes der Technik ist ein Pendel um eine Drehachse schwenkbar angeordnet. Die Drehachse verläuft parallel zur Längsachse eines Schiffes. Mit einem solchen Pendel sind Kippbewegungen um die Längsachse eines Schiffes feststellbar. Eine solche Warnvorrichtung ist nicht geeignet, um zum Beispiel als Ankerwache eingesetzt zu werden. Eine Ankerwache wird eingesetzt, wenn sich ein Schiff nicht in Fahrt sondern in einem ruhenden Zustand befindet und Wind und Wellen unkontrolliert ausgesetzt ist. Ein Schiff in einer solchen Situation neigt dazu, sich mit dem Wind auszurichten, so daß regelmäßig eine kritische Schiffsneigung um eine Querachse, rechtwinklig zur Längsachse oder aber um eine Achse zwischen einer solchen Querachse und einer Längsachse erfolgen wird.

Aus DE-A-2 947 347 ist eine Rektifikationseinrichtung für eine um eine Nulllage schwankende Anlage bekannt. Eine solche Rektifikationseinrichtung kann auch auf Schiffen eingesetzt werden. In einer solchen Rektifikationseinrichtung des Standes der Technik kann ein Pendel frei schwingen.

In den beiden vorgenannten Druckschriften des Standes der Technik ist nicht offenbart, daß die Auslöseempfindlichkeit eines schwingenden Pendels aus seiner Funktion als Ankerwache in Verbindung mit einem Kontaktelement zur Auslösung eines Warnsignals variiert werden kann. Eine solche Einstellmöglichkeit ist aber für die funktionsgerechte Verwendung eines Pendels und insbesondere eines freischwingenden Pendels in der erfindungsgemäßen Ankerwache wesentlich.

Weitere Erfassungseinrichtungen einer räumlichen Schieflage sind bekannt aus FR-A-829 153 US-A-4 872 118, US-A-3 865 306, US-A-4 960 147, EP-A-0 386 768, US-A-4 718 173 und US-A-5 107 407, die alle keine freischwingenden Pendel aufweisen, die in Verbindung mit einem Kontaktelement stehen und in bezug auf eine Auslöseempfindlichkeit einstellbar sind.

Die Aufgabe der vorliegenden Erfindung ist daher, eine Warnvorrichtung zu schaffen, die automatisch die Bewegung eines Schiffes feststellt, anzeigt und bei Überschreitung eines Grenzwertes ein Alarmsignal auslöst.

Die Aufgabe wird erfindungsgemäß gelöst durch die kennzeichnenden Merkmale des Anspruchs 1.

Mit dem Erfindungsgegenstand ist es möglich, auf Ankerwachen und optische Einschätzungen einer Krängung zu verzichten. Die Warnung vor einem kritischen Zustand erfolgt automatisch.

Weitere Vorteile der vorliegenden Erfindung ergeben sich aus den Merkmalen der Unteransprüche 2 bis 10.

Eine Ausführungsform der vorliegenden Erfindung wird im folgenden anhand der Zeichnungen näher beschrieben. Es zeigen:
- Fig. 1: eine schematische, perspektivische Ansicht eines teilweise geöffneten Gehäuses mit der erfindungsgemäßen Wamvorrichtung;
- Fig. 2: eine schematische Darstellung eines ruhig vor Anker liegenden Schiffes;
- Fig. 3: eine schematische Darstellung des Schiffes aus Fig. 2 bei aufkommendem Seegang.

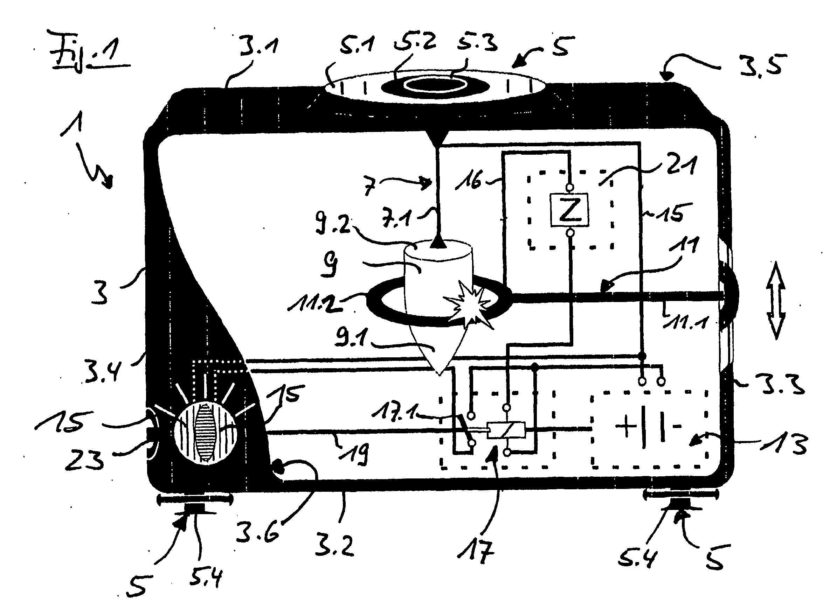

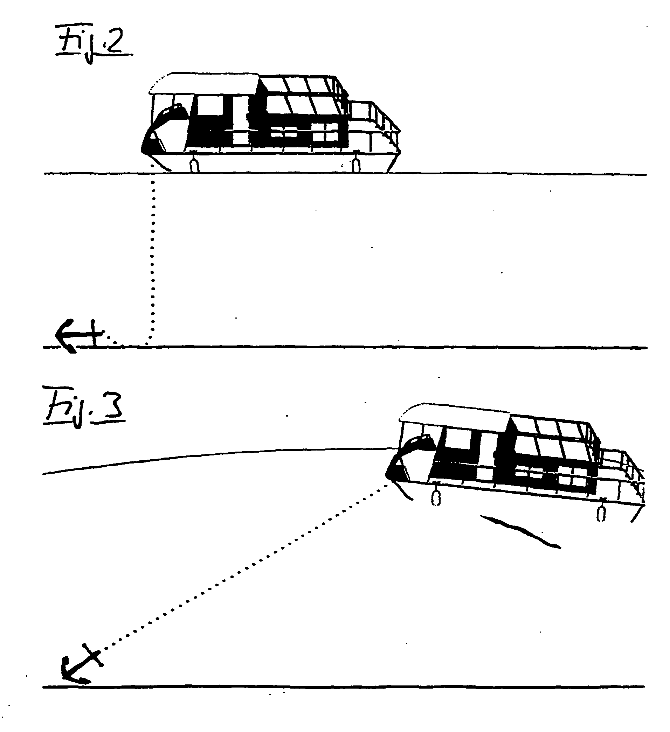

In Fig. 1 ist schematisch eine automatische Warnvorrichtung 1 gemäß vorliegender Erfindung dargestellt. Die Warnvorrichtung 1 in der dargestellten Ausführungsform weist ein Gehäuse 3 auf. In anderen Ausführungsformen kann das Gehäuse 3 auch durch einfache Halterungen, Rahmenteile oder beliebige andere Stützelemente für die Warnvorrichtung 1 ersetzt sein. Das Gehäuse 3 bietet lediglich die Möglichkeit einer kompakten und gegenüber äußeren Einflüssen abgeschirmten Bauweise.

Das Gehäuse 3 umfaßt eine Gehäusedecke 3.1, einen Gehäuseboden 3.2 und vier Gehäuseseiten 3.3, 3.4, 3.5, 3.6. An dem Gehäuse 3 ist eine Justiereinrichtung 5 angeordnet, die - eine transparente Kammer 5.1 mit einem flüssigen Medium und einer Schwimmblase 5.2 und einer Markierung 5.3 umfaßt. Bei Ausrichtung der Schwimmblase 5.2 mit der Markierung 5.3 befindet sich das Gehäuse 3 in einer horizontalen Ausrichtung. Am Gehäuseboden 3.2 sind höhenverstellbare Fußelemente 5.4 (siehe Pfeilrichtung) angeordnet, von denen nur zwei vordere dargestellt sind. Tatsächlich sind aber drei, vier oder mehr Fußelemente vorgesehen. Durch Höhenverstellung der Fußelemente 5.4 kann die Schwimmblase 5.2 mit der Markierung 5.3 in Ausrichtung gebracht werden.

In anderen Ausführungsformen, in denen ein Gehäuse 3 nicht vorgesehen ist, ist die Justiereinrichtung 5 mit anderen Bauteilen der Warnvorrichtung 1 verbunden, derart, daß eine horizontale Abstützung sichergestellt ist.

Im Inneren des Gehäuses 3 ist an der Gehäusedecke 3.1 eine Aufhängung 7 für ein Kontaktpendel 9 angebracht. Die Aufhängung 7 muß in anderen Ausführungsformen nicht direkt an der Gehäusedecke 3.1 angebracht sein sondern kann auch an einer Zwischendecke oder einem anderen beliebigen deckenseitigen Stütz- oder Tragelement angebracht sein, wie einer Halterung, einem Rahmenteil o. dgl.. Die Aufhängung 7 umfaßt ein fadenförmiges oder schnurartiges Element 7.1, das mit einem hängenden Ende an dem Kontaktpendel 9 befestigt ist. Das Kontaktpendel 9 hängt also, wie bei einem Pendel üblich, frei. Das Kontaktpendel 9 hat in der vorliegenden Ausführungsform eine Außenkontur, die einem herkömmlichen Pendel sehr ähnlich ist, mit einer zum hängenden Ende zulaufenden Spitze 9.1 und einer zur Aufhängung 7 hin breiteren und flachen Ende 9.2. Der Außendurchmesser des Kontaktpendels 9 nimmt vom breiten Ende 9.2 zur Spitze 9.1 kontinuierlich ab.

In anderen Ausführungsformen kann das Kontaktpendel 9 auch ganz andere Konturen aufweisen, deren Außendurchmesser in Lotrichtung von einem Ende zum anderen Ende konstant ist, also z. B. zylinderförmig, oder aber variabel ist, mit Abstufungen in beliebiger Folge. Auch kann das spitze Ende 9.1 und das breite flache Ende 9.2 der vorliegenden Ausführungsform genau umgekehrt in Lotrichtung angeordnet sein, also Spitze nach oben. Die Kontur kann auch eine Nachbildung einer bekannten gegenständlichen Form sein.

In dem Gehäuse 3 ist ferner ein Kontaktelement 11 angeordnet. Das Kontaktelement 11 ist in der vorliegenden Ausführungsform an der Seitenwand 3.3 abgestützt. In anderen Ausführungsformen kann das Kontaktelement 11 auch an jeder anderen Seitenwand 3.4, 3.5 oder 3.6 abgestützt sein. Selbst eine Abstützung am Gehäuseboden 3.2 ist möglich. Das Kontaktelement 11 umfaßt einen Tragarm 11.1 und ein Ringelement 11.2. Das Ringelement 11.2 hat einen Innendurchmesser, der größer ist als der maximale Außendurchmesser des Kontaktpendels 9. Das Kontaktelement 11 ist zu dem Kontaktpendel 9 derart angeordnet, daß das Kontaktpendel 9 von dem Ringelement 11.2 umgeben ist. In anderen Ausführungsformen ist es möglich, auch zwei oder mehr Tragarme vorzusehen, die z. B. stemförmig aufeinander zulaufen und jeweils einen Kreisbogenabschnitt des Ringelements tragen. Ein Ringelement 11.2 mit kreisförmiger Kontur in der horizontalen Ebene gilt als ideales Bauteil. In schlechteren Ausführungsformen kann das Ringelement 11.2 auch andere Konturen, z. B. vieleckig, aufweisen.

Die Justiereinrichtung 5 kann in Ausführungsformen ohne Gehäuse 3 auch mit dem Kontaktelement 11 verbunden sein.

Das Kontaktelement 11 ist in der vorliegenden Ausführungsform an der Seitenwand 3.3 höhenverstellbar, d. h., in einer Richtung parallel zur Lotrechten des Kontaktpendels 9. Durch die Höhenverstellbarkeit kann in Abhängigkeit von dem variierenden Außendurchmessers des Kontaktpendels 9 der Abstand zwischen dem Kontaktpendel 9 und dem Kontaktelement 11 variiert werden.

Bei ruhiger See und horizontal ausgerichteter Warnvorrichtung 1 hängt das Kontaktpendel 9 in dem Ringteil 11.2 des Kontaktelements 11. Bei zunehmender See bewegt sich das ortsfeste Kontaktelement 11 mit den Schiffsbewegungen und beginnt das Kontaktpendel 9 an zu schwingen. Durch den Unterschied zwischen dem Außendurchmesser des Kontaktpendels 9 und dem Innendurchmesser des Ringteils 11.2, d. h., je nach Höheneinstellung des Kontaktelements 11 an der Seitenwand 3.3, ist ein Grenzwert für einen Seegang eingestellt, bei dem ein kritischer Zustand für das Schiff entsteht. Wenn sich dann ein solcher Seegang einstellt, berührt das Kontaktpendel 9 das Ringteil 11.2.

Dies ist der rein mechanische Teil der erfindungsgemäßen Warnvorrichtung 1. Damit der Berührungskontakt zwischen Kontaktpendel 9 und Ringteil 11.2 ein Warnsignal auslösen kann, bedarf es eines weiteren elektrischen Teils.

In der vorliegenden Ausführungsform ist in dem Gehäuse 3 eine Spannungsquelle 13 angeordnet. Die Spannungsquelle 13 versorgt über eine Leitung 15 das Kontaktpendel 9 mit einer elektrischen Spannung und über eine Leitung 16 das Ringteil 11.2 ebenfalls mit einer elektrischen Spannung. Ferner versorgt die Spannungsquelle 13 auch eine Alarmeinrichtung 15 mit einer elektrischen Spannung. Die Alarmeinrichtung 15 ist in der vorliegenden Ausführungsform eine akustische Alarmeinrichtung 15, die ein akustisches Warnsignal erzeugen kann. Darüber hinaus kann mit der Alarmeinrichtung 15 aber auch ein optisches Warnsignal Signal erzeugt werden.

Zwischen dem Ringteil 11.2 und der Alarmeinrichtung 15 ist eine Schalteinrichtung 17 angeordnet, die vorzugsweise ein Stromstoßrelais ist. Solche Relais sind allgemein bekannt und werden daher hier nicht weiter beschrieben.

Bei Berührung zwischen Kontaktpendel 9 und Ringteil 11.2 gibt es einen Spannungsfluß, der in der Schalteinrichtung 17 das Anziehen eines Schalters 17.1 bewirkt, so daß über eine Leitung 19 die Alarmeinrichtung 15 mit der elektrischen Spannung versorgt ist und aktiviert wird, um ein akustisches und ggf. auch optisches Warnsignal zu erzeugen und abzugeben.

Zwischen dem Ringteil 11.2 und der Schalteinrichtung 17 ist in der vorliegenden Ausführungsform auch ein Impulszähler 21 angeordnet. Der Impulszähler 21 öffnet erst, wenn eine vorbestimmte Impulszahl, also an Berührungskontakten zwischen Kontaktpendel 9 und Ringteil 11.2 aufgetreten ist. Dadurch kann verhindert werden, daß die Warnvorrichtung 1 bereits bei Wellenschlägen von vorbeifahrenden Booten auslöst.

Mit der Alarmeinrichtung 15 ist ein Betriebsschalter 23 in an sich bekannter Weise verbunden, derart, daß die Gesamtfunktion oder nur die Arlarmfunktion der Warnvorrichtung 1 EIN/AUS-geschaltet werden kann. Auch andere, allgemein bekannte Betriebsfunktionen, wie PAUSE, STAND-BY, WIEDERHOLUNG der Warnung nach Ausschaltung des Alarms, Zeitsteuerungen, Melodiewahl für das Alarmsignal u. v. m., die allgemein bekannt sind, können auch in der erfindungsgemäßen Warnvorrichtung 1 eingesetzt werden. Selbst eine Fernsteuerung kann vorgesehen sein. Allerdings sollte die Ausschaltung des Geräts eine gewisse Mühe machen, um die Alarmfunktion nicht aufzuheben.

Das Kontaktpendel 9 und das Ringteil 11.2 bestehen aus einem beliebigen leitfähigen Material.

## Patentansprüche

1. Automatische Warnvorrichtung zur Warnung vor einer kritischen Schiffsneigung, z.B. bei Wellenbildung oder Krängung, mit
einem Kontaktpendel (9) auf einer elektrischen Spannung,
einem ortsfesten Kontaktelement (11, 11.2) auf einer elektrischen Spannung, wobei das Kontaktpendel (9) in neigungsfreiem Zustand des Schiffes kontaktlos zu dem Kontaktelement (11, 11.2) angeordnet ist,
einer Alarmeinrichtung (15) zur Abgabe eines Warnsignals bei einem vorbestimmten Neigungszustand des Schiffes,
wobei eine Berührung des Kontaktpendels (9) an dem Kontaktelement (11, 11,2) bei der vorbestimmten Neigung zu einem Spannungsschluß führt, der die Alarmeinrichtung (15) zur Abgabe des Warnsignals aktiviert,
**dadurch gekennzeichnet,**
**daß** das Kontaktpendel (9) an einer Aufhängung (7) frei hängend angebracht ist, und daß das Kontaktelement (11, 11.2) in Lotrichtung verstellbar ist, derart, daß der Abstand zwischen Kontaktpendel (9) und Kontaktelement (11, 11.2) in Abhängigkeit von einem variierenden Außendurchmesser des Kontaktpendels (9) veränderbar ist.

2. Automatische Warnvorrichtung nach Anspruch 1,
**dadurch gekennzeichnet,**
**daß** zwischen dem Kontaktelement (11, 11.2) und der Alarmeinrichtung (15) eine Schalteinrichtung (17) angeordnet ist, die bei vorliegendem Spannungsfluß einen Stromkreis zur Alarmeinrichtung (15) schließt.

3. Automatische Warnvorrichtung nach Anspruch 2,
**dadurch gekennzeichnet,**
**daß** zwischen dem Kontaktelement (11, 11.2) und der Schalteinrichtung (17) ein Impulszähler (21) angeordnet ist.

4. Automatische Warnvorrichtung nach einem der Ansprüche 1 bis 3,
**dadurch gekennzeichnet,**
**daß** das Kontaktelement (11, 11.2) das Kontaktpendel (9) ringförmig, wobei der Innendurchmesser des Kontaktelements (11, 11.2) größer als der Außendurchmesser des Kontaktpendels (9) ist, derart, daß eine leichte Pendelbewegung ohne Berührung möglich ist.

5. Automatische Warnvorrichtung nach einem der vorstehenden Ansprüche,
**dadurch gekennzeichnet,**
**daß** das Kontaktpendel (9) einen in Lotrichtung variierenden Außendurchmesser hat.

6. Automatische Warnvorrichtung nach einem der vorstehenden Ansprüche,
**dadurch gekennzeichnet,**
**daß** das Kontaktpendel (9) in einem Gehäuse (3) deckenseitig abgestützt ist.

7. Automatische Warnvorrichtung nach Anspruch 6,
**dadurch gekennzeichnet,**
**daß** in dem Gehäuse (3) eine Spannungsquelle (13) angeordnet ist, welche über elektrische Leitungen (15, 16) das Kontaktpendel (9) und das Kontaktelement (11, 11.2) mit der Spannung versorgt.

8. Automatische Warnvorrichtung nach einem der vorstehenden Ansprüche,
**dadurch gekennzeichnet,**
**daß** eine Justiereinrichtung (5) vorgesehen ist, um das Kontaktelement (11, 11.2) horizontal auszurichten..

9. Automatische Warnvorrichtung nach Anspruch 8,
**dadurch gekennzeichnet,**
**daß** die Justiereinrichtung (5) eine Schwimmblase (5.2) und am Gehäuse (3) höhenverstellbare Fußelemente (5.4) zur horizontalen Ausrichtung des Gehäuses (3) umfaßt.

10. Automatische Warnvorrichtung nach einem der Ansprüche 2 bis 9,
**dadurch gekennzeichnet,**
**daß** die Schalteinrichtung (17) ein Stromstoßrelais ist.

## Claims

1. Automatic warning device to give warning of a critical boat tilt, for example in the event of waves or listing, having
a contact pendulum (9) connected to an electrical voltage,
a fixed contact element (11, 11.2) connected to an electrical voltage, the contact pendulum (9) being positioned so that it does not touch the contact element (11, 11.2) when the boat is not tilted,
an alarm device (15) for the purpose of giving a warning signal when the boat is at a predetermined angle of tilt,
wherein contact by the contact pendulum (9) with the contact element (11, 11.2) at the predetermined tilt causes a short circuit which activates the alarm device (15) to give the warning signal,
**characterised in that**
the contact pendulum (9) is attached in a freely suspended manner from a hanging apparatus (7), and **in that** the contact element (11, 11.2) can be adjusted in a vertical direction in such a way that the distance between the contact pendulum (9) and the contact element (11, 11.2) can be altered as a function of a variation in the external diameter of the contact pendulum (9).

2. Automatic warning device as in claim 1,
**characterised in that**
a switch apparatus (17) is positioned between the contact element (11, 11.2) and the alarm device (15), which switch apparatus closes an electric circuit to the alarm device (15) when there is flowing current present.

3. Automatic warning device as in claim 2,
**characterised in that**
a pulse counter (21) is positioned between the contact element (11, 11.2) and the switch apparatus (17).

4. Automatic warning device as in one of claims 1 to 3,
**characterised in that**
the contact element (11, 11.2) surrounds the contact pendulum (9) like a ring, the internal diameter of the contact element (11, 11.2) being greater than the external diameter of the contact pendulum (9) so that a slight movement of the pendulum is possible without any contact taking place.

5. Automatic warning device as in one of the preceding claims,
**characterised in that**
the contact pendulum (9) has an external diameter which varies in the vertical direction.

6. Automatic warning device as in one of the preceding claims,
**characterised in that**
the contact pendulum (9) is supported at the top cover inside a housing (3).

7. Automatic warning device as in claim 6,
**characterised in that**
an electrical power source (13) is positioned in the housing (3) which supplies current to the contact pendulum (9) and the contact element (11, 11.2) by means of electric wires (15, 16).

8. Automatic warning device as in one of the preceding claims,
**characterised in that**
there is an adjusting device (5) to align the contact element (11, 11.2) horizontally.

9. Automatic warning device as in claim 8,
**characterised in that**
the adjusting device (5) comprises a floating bubble (5.2) and height-adjustable foot elements (5.4) on the housing (3) to align the housing (3) horizontally.

10. Automatic warning device as in one of claims 2 to 9,
**characterised in that**
the switch apparatus (17) is a pulse relay.

## Revendications

1. Dispositif d'avertissement automatique destiné à alerter en cas d'inclinaison critique d'un bateau, par ex. en cas de formation de vagues ou de gîte, comportant
un pendule de contact (9) sur une tension électrique,
un élément de contact (11, 11.2) fixe sur une tension électrique, le pendule de contact (9) étant agencé sans contact avec l'élément de contact (11, 11.2) dans l'état non incliné du bateau,
un dispositif d'alarme (15) destiné à émettre un signal d'avertissement dans le cas d'un état d'inclinaison prédéterminé du bateau,
un contact du pendule de contact (9) avec l'élément de contact (11, 11.2) lors de l'inclinaison prédéterminée provoquant une fermeture électrique qui active le dispositif d'alarme (15) afin d'émettre le signal d'alarme,
**caractérisé en ce que** le pendule de contact (9) est accroché librement à une suspension (7) et **en ce que** l'élément de contact (11, 11.2) peut être déplacé perpendiculairement de telle manière que la distance entre le pendule de contact (9) et l'élément de contact (11, 11.2) puisse être modifiée en fonction d'un diamètre extérieur variable du pendule de contact (9).

2. Dispositif d'avertissement automatique selon la revendication 1,
**caractérisé en ce qu'**il est agencé, entre l'élément de contact (11, 11.2) et le dispositif d'alarme (15), un dispositif de commutation (17) qui ferme un circuit électrique en direction du dispositif d'alarme (15) en présence d'un flux de tension.

3. Dispositif d'avertissement automatique selon la revendication 2,
**caractérisé en ce qu'**il est agencé, entre l'élément de contact (11, 11.2) et le dispositif de commutation (17), un compteur d'impulsions (21).

4. Dispositif d'avertissement automatique selon l'une des revendications 1 à 3,
**caractérisé en ce que** l'élément de contact (11, 11.2) entoure le pendule de contact (9) de manière circulaire, le diamètre intérieur de l'élément de contact (11, 11.2) étant supérieur au diamètre extérieur du pendule de contact (9) de manière qu'un léger mouvement de pendule soit possible sans créer de contact.

5. Dispositif d'avertissement automatique selon l'une des revendications précédentes,
**caractérisé en ce que** le pendule de contact (9) possède un diamètre extérieur qui varie à l'aplomb.

6. Dispositif d'avertissement automatique selon l'une des revendications précédentes,
**caractérisé en ce que** le pendule de contact (9) est supporté côté plafond dans un boîtier (3).

7. Dispositif d'avertissement automatique selon la revendication 6,
**caractérisé en ce qu'**il est agencé, dans le boîtier (3), une source de tension (13) qui alimente le pendule de contact (9) et l'élément de contact (11, 11.2) en tension par l'intermédiaire de conduites électriques (15, 16).

8. Dispositif d'avertissement automatique selon l'une des revendications précédentes,
**caractérisé en ce qu'**il est prévu un dispositif d'ajustement (5) afin d'aligner l'élément de contact (11, 11.2) horizontalement.

9. Dispositif d'avertissement automatique selon la revendication 8,
**caractérisé en ce que** le dispositif d'ajustement (5) comprend un niveau d'eau (5.2) et des éléments de pied (5.4) réglables en hauteur sur le boîtier (3) afin d'aligner le boîtier (3) horizontalement.

10. Dispositif d'avertissement automatique selon l'une des revendications 2 à 9,
**caractérisé en ce que** le dispositif de commutation (17) est un relais à impulsion.
